# EUROPÄISCHE PATENTSCHRIFT

(11) **EP 0 720 934 B1**
(45) Veröffentlichungstag und Bekanntmachung des Hinweises auf die Patenterteilung: **21.10.1998**
(21) Anmeldenummer: 95117884.7
(22) Anmeldetag: 14.11.1995
(51) Int. Cl.: B60R 13/02

(54) **Innenverkleidungselement für Fahrzeuge mit zumindest einem daran vormontierten Haltegriff**
Interior lining part for vehicles with at least a pre-assembled handgrip attached to it
Elément de revêtement intérieur de véhicules avec au moins une poignée pré-assemblée attachée à celle-ci

(30) Priorität: 07.01.1995 DE 19500337
(43) Veröffentlichungstag der Anmeldung: 10.07.1996
(73) Patentinhaber: BECKER GROUP EUROPE GmbH, 42285 Wuppertal (DE)
(72) Erfinder: Kauka, Christof, D-42665 Solingen (DE)

(56) Entgegenhaltungen:
- DE-A- 3 245 927
- DE-A- 3 616 441
- DE-A- 4 224 148

## Beschreibung

Die Erfindung bezieht sich auf ein Innenverkleidungselement für Fahrzeuge mit einer Vorderseite, die dem Fahrzeuginnenraum zugewandt ist, einer Rückseite, die dem Fahrzeuginnenraum abgewandt ist, und mit zumindest einem am Innenverkleidungselement vormontierten Haltegriff, der aus einem etwa U-förmigen Griffkörper, Lagerböcken, an denen die Schenkelenden des Griffkörpers über Gelenkmittel angelenkt sind und einem Federmittel, um den Griffkörper in der Nichtgebrauchslage an der Vorderseite des Innenverkleidungselements in Anlage zu halten, besteht, wobei das Innenverkleidungselement Durchbrüche zur Aufnahme der Lagerböcke aufweist, jeder Lagerbock mit einem sich an der Vorderseite des Innenverkleidungselements abstützenden Flansch und einem Lagertopf zur Aufnahme eines Schenkelendes des Griffkörpers ausgebildet ist, und die Lagerböcke und die Schenkelenden des Griffkörpers miteinander fluchtende, sich parallel zum Innenverkleidungselement erstreckende Lagerbohrungen aufweisen

An ein Innenverkleidungselement Anbauteile, wie Haltegriffe vorzumontieren ist bekannt, (vgl. z. B. DE 42 24 148 A1). Bei herkömmlichen, für eine Vormontage an ein Innenverkleidungselement geeigneten Haltegriffen wird im allgemeinen bemängelt, daß diese einen aus vielen Einzelteilen zusammengesetzten Aufbau aufweisen und auch aufwendig zu montieren und demontieren sind. Ein üblicher Haltegriff für Fahrzeuge besteht in der Regel schon aus sieben Teilen, nämlich einem Griffkörper, zwei Lagerböcken, zwei Gelenkstiften und zwei Schenkelfedern. Bei vorzumontierenden Haltegriffen kommen noch zwei ein Innenverkleidungselement hintergreifende Plattenelemente als Widerlager hinzu.

Der vorliegenden Erfindung liegt nun die Aufgabe zugrunde, hier Abhilfe zu schaffen und ein Innenverkleidungselement für Fahrzeuge mit wenigstens einem daran vormontierten Haltegriff der eingangs näher erwähnten Art zur Verfügung zu stellen, bei dem mit weniger Einzelteilen ausgekommen werden soll, um auf diese Weise Herstellungs-, Lagerhaltungs- und Montagekosten einzusparen, wie auch die Montage/Demontage zu erleichtern.

Zur Lösung dieser Aufgabe sind erfindungsgemäß die im Anspruch angegebenen Maßnahmen vorgesehen.

Ein derart ausgebildetes Innenverkleidungselement, bei dem es sich um einen Fahrzeughimmel, ein Dachrahmenverkleidungselement, eine Griffschale oder dgl. handeln kann, stellt mit dem daran vormontierten Haltegriff eine fertige, aus nur wenigen Einzelteilen bestehende Einbaueinheit dar. Von besonderem Vorteil ist, daß als Vormontageelement für den Haltegriff ein einziger Federdrahtabschnitt mit abgewinkelten Federschenkeln dient, der darüber hinaus gleichzeitig die bisher als notwendig erachteten Gelenkstifte und Schenkelfedern ersetzt. Zur Montage sind lediglich der Griffkörper und die beiden Lagerböcke zusammenzulegen, in die Durchbrüche im Innenverkleidungselement einzusetzen und von der Rückseite des Innenverkleidungselements her durch Eindrücken der Torsionsfeder durch die Radialschlitze in die Lagerbohrungen miteinander zu verbinden. Die Torsionsfeder wird beim Eindrücken in die Lagerbohrungen gleichzeitig vorgespannt, so daß sich für den Griffkörper ein rappelfreier Anlagesitz an der Vorderseite des Innenverkleidungselements ergibt. Die Überführung des Griffkörpers in die Gebrauchslage erfolgt jeweils gegen die Rückstellkraft der Torsionsfeder.

Ein Ausführungsbeispiel der Erfindung wird nachfolgend anhand der Zeichnungen näher erläutert, und es zeigen:
- Fig. 1: eine Befestigungsanordnung eines Haltegriffs an einem Innenverkleidungselement,

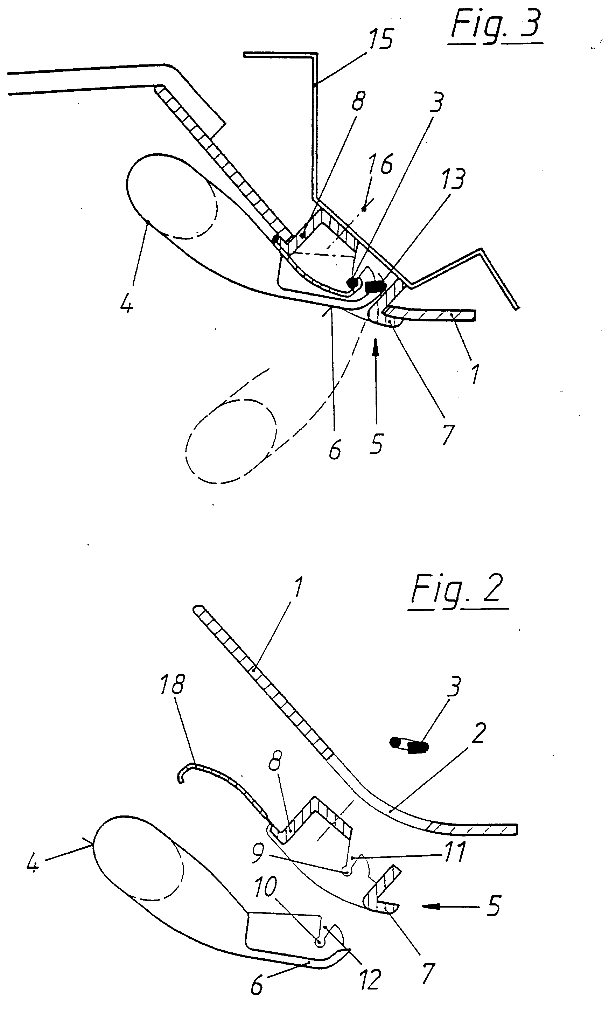

- Fig. 2: einen Schnitt etwa folgend der Linie A - A in Fig. 1 in einer die Montagefolge verdeutlichenden Explosivdarstellung und
- Fig. 3: einen Schnitt etwa folgend der Linie A - A in Fig. 1 nach erfolgter Montage.

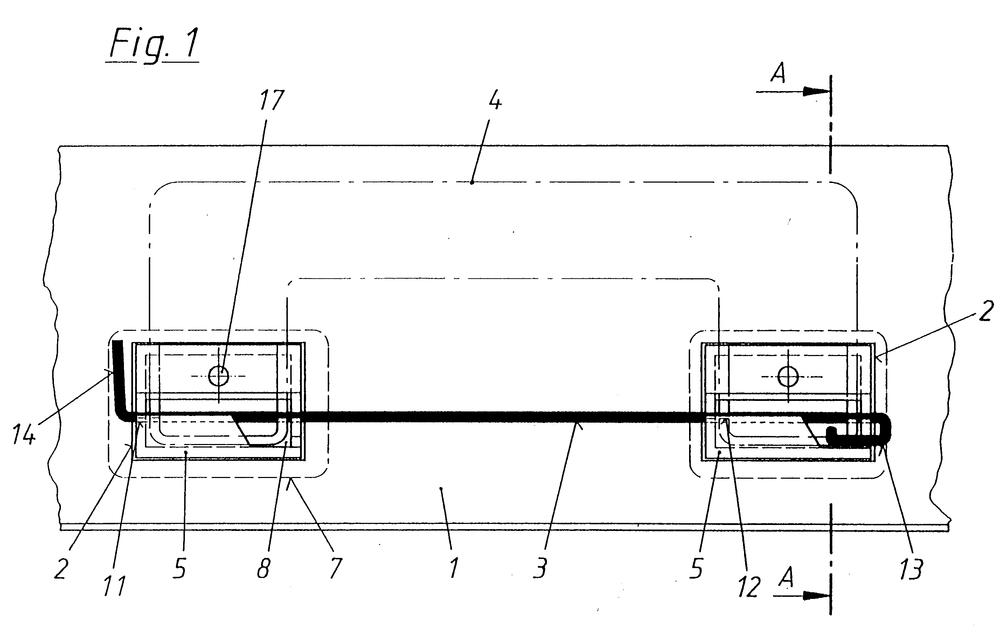

Fig. 1 zeigt ein als Dachhimmel, Dachrahmenverkleidungselement, Griffschale oder dgl. ausgebildetes Innenverkleidungselement 1 von der dem Fahrzeuginnenraum abgewandten Rückseite her. Das Innenverkleidungselement 1 weist zwei mit Abstand nebeneinander angeordnete Durchbrüche 2 auf. Die Durchbrüche 2 dienen in Verbindung mit einer Torsionsfeder 3 zur Festlegung eines Haltegriffs am Innenverkleidungselement 1 in einer Vormontageanordnung.

Der Haltegriff besteht aus einem etwa U-förmigen Griffkörper 4, Lagerböcken 5, an denen die Schenkelenden 6 des Griffkörpers 4 festgelegt sind und der erwähnten Torsionsfeder 3, über die die Festlegung der Schenkelenden 6 an den Lagerböcken 5 sowie am Innenverkleidungselement 1 erfolgt und die zudem dazu dient, den Griffkörper 4 in der Nichtgebrauchslage zu halten bzw. nach Gebrauch wieder in die Nichtgebrauchslage zurückzuführen.

Jeder der Lagerböcke 5 ist mit einem sich an der dem Fahrzeuginnenraum zugewandten Vorderseite des Innenverkleidungselements 1 abstützenden Flansch 7 und einem Lagertopf 8 zur Aufnahme eines Schenkelendes 6 des Griffkörpers 4 ausgebildet. Die Lagerböcke 5 weisen Lagerbohrungen 9 und die Schenkelenden 6 Lagerbohrungen 10 auf, die nach dem Zusammenstecken der Lagerböcke 5 und der Schenkelenden 6 miteinander fluchten. Die Lagerbohrungen 9, 10 sind von außen her durch darin radial einmündende Schlitzöffnungen 11, 12 zugänglich.

Bei der Vormontage des Haltegriffs am Innenverkleidungselement 1 werden die Lagerböcke 5 in die Durchbrüche 2 und die Schenkelenden 6 des Griffkörpers 4 in die Lagertöpfe 8 der Lagerböcke 5 eingesteckt. Von der Rückseite des Innenverkleidungselements 1 her wird sodann ein die Lagerböcke 5 und die Schenkelenden 6 miteinander verbindender, die Torsionsfeder 3 bildender Federdraht durch die Schlitzöffnungen 11, 12 hindurch in die Lagerbohrungen 9, 10 eingebracht bzw. eingeklipst. Die aus einem Federdraht gebildete Torsionsfeder 3 erstreckt sich auf der Rückseite des Innenverkleidungselement 1 von Lagerbock 5 zu Lagerbock 5 und sie weist einendig einen sich an einem Schenkelende 6 des Griffkörpers 4 abstützenden ersten Federschenkel 13 und anderendig einen sich an der Rückseite des Innenverkleidungselements 1 abstützenden gegensinnig abgewinkelten zweiten Federschenkel 14 auf. Die Federschenkel 13, 14 sind derart abgewinkelt, daß die Anordnung der Torsionsfeder 3 unter Vorspannung erfolgen muß, um eine klapperfreie Anlage des Griffkörpers 4 am Innenverkleidungselement 1 zu gewährleisten.

Fig. 3 zeigt das Innenverkleidungselement 1 mit dem daran vormontierten Haltegriff in einer Befestigungsanordnung an dem Innenblech 15 einer Fahrzeugkarosserie. Dabei soll mit einer strichpunktierten Linie 16 eine ins Innenblech 15 eingedrehte Schraube angedeutet sein, die eine Bohrung 17 im Boden des Lagertopfs 8 durchsetzt und die sich mit ihrem Kopf auf dem Boden des Lagertopfs 8 abstützt. An den Lagerböcken 5 über Filmscharniere angeformte Deckelelemente 18 sind vorgesehen, um die Befestigungsstellen den Blicken eines Betrachters zu entziehen.

Der Griffkörper 4 des Haltegriffs kann aus seiner mit durchgezogenen Linien dargestellten Nichtgebrauchslage in die gestrichelt angedeutete Gebrauchslage (vgl. Fig. 3) geschwenkt werden, und zwar gegen die Kraft der Torsionsfeder 3, die bestrebt ist, den Griffkörper 4 stets in die Nichtgebrauchslage zurückzuführen.

## Patentansprüche

1. Innenverkleidungselement (1) für Fahrzeuge mit einer Vorderseite, die dem Fahrzeuginnenraum zugewandt ist, einer Rückseite, die dem Fahrzeuginnenraum abgewandt ist, und mit zumindest einem am Innenverkleidungselement (1) vormontierten Haltegriff, der aus einem etwa U-förmigen Griffkörper (4), Lagerböcken (5), an denen die Schenkelenden (6) des Griffkörpers (4) über Gelenkmittel angelenkt sind und einem Federmittel, um den Griffkörper (4) in der Nichtgebrauchslage an der Vorderseite des Innenverkleidungselements (1) in Anlage zu halten, besteht, wobei das Innenverkleidungselement (1) Durchbrüche (2) zur Aufnahme der Lagerböcke (5) aufweist, jeder Lagerbock (5) mit einem sich an der Vorderseite des Innenverkleidungselements (1) abstützenden Flansch (7) und einem Lagertopf (8) zur Aufnahme eines Schenkelendes (6) des Griffkörpers (4) ausgebildet ist, und die Lagerböcke (5) und die Schenkelenden (6) des Griffkörpers (4) miteinander fluchtende, sich parallel zum Innenverkleidungselement (1) erstreckende Lagerbohrungen (9, 10) aufweisen, dadurch gekennzeichnet, daß die Lagerbohrungen (9, 10) von der in der Nichtgebrauchslage an der Vorderseite des Innenverkleidungselements (1) anliegenden Rückseite des Griffkörpers (4) her durch darin mündende Schlitzöffnungen (11, 12) zugänglich sind, daß durch die Schlitzöffnungen (11, 12) hindurch unter gewisser federelastischer Aufweitung der Schlitzwände ein die Lagerböcke (5) und die Schenkelenden (6) des Griffkörpers (4) miteinander verbindender Federdraht in die Lagerbohrungen (9, 10) eingebracht ist, der sich auf der Rückseite des Innenverkleidungselements (1) von Lagerbock (5) zu Lagerbock (5) erstreckt, und daß der Federdraht eine Torsionsfeder (3) ist, die einendig einen sich an einem Schenkelende (6) des Griffkörpers (4) abstützenden ersten Federschenkel (13) und anderendig einen sich an der Rückseite des Innenverkleidungselements (1) abstützenden zweiten Federschenkel (14), der zum ersten gegensinnig abgewinkelt ist, aufweist.

## Claims

1. Interior lining element (1) for vehicles, having a front side which faces the vehicle interior, a rear side which faces away from the vehicle interior, and having at least one grab handle which is preassembled on the interior lining element (1) and comprises an approximately U-shaped handle body (4), bearing brackets (5), on which the leg ends (6) of the handle body (4) are articulated via hinge means, and a spring means in order to keep the handle body (4), in the out-of-use position, against the front side of the interior lining element (1), the interior lining element (1) having apertures (2) for receiving the bearing brackets (5), each bearing bracket (5) being formed with a flange (7), which is supported on the front side of the interior lining element (1), and a bearing cup (8) for receiving one leg end (6) of the handle body (4), and the bearing brackets (5) and the leg ends (6) of the handle body (4) having bearing holes (9, 10) which are aligned with one another and extend parallel to the interior lining element (1), characterized in that the bearing holes (9, 10) are accessible from the rear side of the handle body (4), which rear side bears against the front side of the interior lining element (1) in the out-of-use position, through slot openings (11, 12) which open into the handle body, in that a spring wire, which connects the bearing brackets (5) and the leg ends (6) of the handle body (4) to one another, is introduced through the slot openings (11, 12), with a certain, resilient expansion of the slot walls, into the bearing holes (9, 10), which spring wire extends from bearing bracket (5) to bearing bracket (5) on the rear side of the interior lining element (1), and in that the spring wire is a torsion spring (3) which at one end has a first spring leg (13), which is supported on one leg end (6) of the handle body (4), and at the other end has a second spring leg (14), which is supported on the rear side of the interior lining element (1) and is bent in the opposite direction to the first spring leg.

## Revendications

1. Elément de revêtement intérieur (1) de véhicules avec un côté avant, qui est tourné vers l'espace intérieur du véhicule, un côté arrière, qui est tourné du côté opposé à l'espace intérieur du véhicule, et avec au moins une poignée prémontée sur l'élément de revêtement intérieur (1), qui se compose d'un corps de poignée (4) approximativement en forme de U, de supports (5) sur lesquels s'articulent les extrémités des branches (6) de la poignée (4) par l'intermédiaire d'organes d'articulation, et d'un moyen de ressort, afin de maintenir en appui la poignée (4) dans la position de non utilisation contre le côté avant de l'élément de revêtement intérieur (1), l'élément de revêtement intérieur (1) présentant des ouvertures (2) pour recevoir les supports (5), chaque support (5) étant formé avec une bride (7) s'appuyant contre le côté avant de l'élément de revêtement intérieur (1) et un réceptacle de support (8) pour recevoir une extrémité des branches (6) de la poignée (4), et les supports (5) et les extrémités des branches (6) de la poignée (4) présentant des alésages de support (9, 10) s'étendant en alignement l'un avec l'autre parallèlement à l'élément de revêtement intérieur (1), caractérisé en ce que les alésages de support (9, 10) sont accessibles depuis le côté arrière de la poignée (4) appuyé dans la position de non utilisation contre le côté avant de l'élément de revêtement intérieur (1) à travers des ouvertures fendues (11, 12) débouchant dans ceux-ci, en ce que l'on introduit dans les alésages de support (9, 10), à travers les ouvertures fendues (11, 12), par un certain élargissement élastique des parois des fentes, un fil d'acier à ressort reliant les supports (5) et les extrémités des branches (6) de la poignée (4), lequel fil s'étend sur le côté arrière de l'élément de revêtement intérieur (1) d'un support (5) à un autre (5), et en ce que le fil d'acier à ressort est un ressort à torsion (3), qui présente à une extrémité, une première branche de ressort (13) s'appuyant contre une extrémité de branche (6) de la poignée (4), et à l'autre extrémité une deuxième branche de ressort (14) s'appuyant sur le côté arrière de l'élément de revêtement intérieur (1), laquelle est inclinée dans le sens inverse par rapport à la première.
